# EUROPÄISCHE PATENTSCHRIFT

(11) **EP 1 969 340 B1**
(45) Veröffentlichungstag und Bekanntmachung des Hinweises auf die Patenterteilung: **10.07.2019**
(21) Anmeldenummer: 06829781.1
(22) Anmeldetag: 20.12.2006
(51) Int. Cl.: G01N 1/28, G01N 1/04, B01L 3/00

(54) **MIKRODISSEKTIONSVERFAHREN UND MIKRODISSEKTIONSSYSTEM**
MICRODISSECTION METHOD AND MICRODISSECTION SYSTEM
PROCEDE DE MICRODISSECTION ET SYSTEME DE MICRODISSECTION

(30) Priorität: 05.01.2006 DE 102006000934
(43) Veröffentlichungstag der Anmeldung: 17.09.2008
(73) Patentinhaber: Carl Zeiss Microscopy GmbH, 07745 Jena (DE)
(72) Erfinder: SCHÜTZE, Karin, 82327 Tutzing (DE)
(74) Vertreter: Banzer, Hans-Jörg
(86) Internationale Anmeldenummer: PCT/EP2006/012316
(87) Internationale Veröffentlichungsnummer: WO 2007/076934

(56) Entgegenhaltungen:
- EP-A- 1 367 380
- WO-A-2004/045768
- WO-A-2005/107949
- WO-A-2005/114135
- WO-A2-02/10751
- KEMPER B ET AL: "Holographic interferometric microscopy systems for the application on biological samples" PROCEEDINGS OF THE SPIE, SPIE, BELLINGHAM, VA, US, Bd. 5457, 2004, Seiten 581-588, XP002399968 ISSN: 0277-786X

## Beschreibung

Die vorliegende Erfindung betrifft ein Laser-Mikrodissektionsverfahren und Laser-Mikrodissektionssystem zur Separierung und zur Gewinnung von Objekten eines Präparats, insbesondere eines biologischen Präparats. Insbesondere betrifft die vorliegende Erfindung ein Laser-Mikrodissektionsverfahren und Laser-Mikrodissektionssystem zur Gewinnung von Objekten eines räumlich inhomogenen Präparats.

Ein herkömmliches Laser-Mikrodissektionssystem der Anmelderin ist beispielsweise aus der WO 97/29355 A oder aus der WO 01/73398 A bekannt. Dieses Laser-Mikrodissektionssystem erlaubt die rechnergestütze Selektierung einzelner biologischer oder nicht-biologischer Objekte, die auf einem planaren Träger angeordnet sind, und deren Bearbeitung mit einem Laserstrahl. Insbesondere können die Objekte durch die Bearbeitung mit dem Laserstrahl zu einer oder mehreren Auffangvorrichtungen transportiert werden. Mehrere direkt oder indirekt durch den Laserstrahl induzierte Transportprozesse sind möglich und in den genannten Druckschriften beschrieben. Beispielsweise kann ein selektiertes Objekt mit dem Laserstrahl ganz oder teilweise von dem umgebenden Präparat abgetrennt und somit freipräpariert werden. Anschließend kann das freipräparierte Objekt mit einem laserinduzierten Transportprozess mit Hilfe eines Laserschusses, der auf das Objekt gerichtet wird, von dem Träger zu einer Auffangvorrichtung hin beschleunigt oder "katapultiert" werden. Das Objekt kann auch derart freipräpariert werden, dass es noch mit einem Reststeg mit dem umgebenden Präparat verbunden ist, wobei mit Hilfe des Laserschusses sowohl der Reststeg durchtrennt als auch das Objekt zu der Auffangvorrichtung katapultiert werden kann.

Der laserinduzierte Transportprozess kann prinzipiell auch ohne eine vorhergehende Freipräparation des jeweils selektierten Objekts realisiert werden, falls die auf das Objekt wirkende Kraft ausreicht, um das Objekt sowohl aus dem Präparat herauszulösen als auch zu der Auffangvorrichtung zu beschleunigen. Laser-Mikrodissektionssysteme ermöglichen eine Separierung, Sortierung und Gewinnung sowohl von biologischen als auch von nicht biologischen Objekten. Insbesondere ermöglicht Laser-Mikrodissektion eine berührungslose Separierung biologischer Objekte, beispielsweise einzelner Zellen, von einem Präparat. Da die biologischen Objekte durch den Abtrenn- und/oder Katapultierprozess nicht geschädigt oder beeinträchtigt werden, stehen sie nach der Separierung für weitere Untersuchungen oder eine weitere Kultivierung zur Verfügung.

So können beispielsweise Tumorzellen von gesunden Zellen eines Gewebeschnitts separiert und anschließend untersucht werden. Ist eine Mehrzahl von Auffangvorrichtungen für separierte Objekte, beispielsweise verschiedene Zellen, vorhanden, so können die Objekte gemäß ihrem Typ in verschiedene Auffangvorrichtungen katapultiert und so sortiert werden.

Die WO 2005/107949 A1 offenbart ein Verfahren bzw. eine Vorrichtung zur Erzeugung einer Analyseanordnung mit diskreten, separaten Messbereichen und dient als Basis für den Oberbegriff des Patentanspruchs 1 und 16.

Die WO 2004/045768 A1 offenbart ein Mikroskopsystem, das für eine Identifizierung einer Aufnahmevorrichtung mit mehreren Aufnahmebehältern eingerichtet ist. Bei dem Mikroskopsystem können Objekte aus einem biologischen Material mittels Laserbestrahlung herausgelöst und zu Aufnahmebehältern der Aufnahmevorrichtung transportiert werden, wobei einzelne selektierte Objekte gewünschten Aufnahmebehältern zugeordnet werden können.

Obwohl bekannte Laser-Mikrodissektionssysteme eine vom Objekttyp abhängige Sortierung ermöglichen, können auch Objekte des gleichen Typs, z.B. Tumorzellen, verschiedene Eigenschaften aufweisen. Folglich besteht in der Technik ein Bedürfnis nach Laser-Mikrodissektionssystemen und Laser-Mikrodissektionsverfahren, welche eine Sortierung von aus dem Präparat separierten Objekten nicht nur gemäß eines Objekttyps, sondern auch gemäß weiterer Kriterien ermöglichen.

Somit liegt der vorliegenden Erfindung die Aufgabe zu Grunde, ein verbessertes Laser-Mikrodissektionsverfahren und ein verbessertes Laser-Mikrodissektionssystem zur Verfügung zu stellen, insbesondere ein Laser-Mikrodissektionsverfahren und - system, welches eine Sortierung von aus dem Präparat separierten Objekten nach ihrer Lage oder Position ermöglicht.

Erfindungsgemäß wird diese Aufgabe gelöst durch ein Mikrodissektionsverfahren nach Anspruch 1 und ein Mikrodissektionssystem nach Anspruch 16. Die abhängigen Ansprüche definieren bevorzugte oder vorteilhafte Ausführungsbeispiele.

Ein erfindungsgemäßes Mikrodissektionsverfahren umfasst die Schritte Bereitstellen eines Präparats, Bereitstellen einer Mehrzahl von Auffangmitteln zum Auffangen eines aus dem Präparat herausgelösten Objekts, wobei die Mehrzahl von Auffangmitteln eine vordefinierte räumliche Anordnung zueinander aufweist, Transportieren eines ersten Objekts des Präparats durch Laserbestrahlung zu einem ersten Auffangmittel und Beschleunigen eines zweiten Objekts des Präparats durch Laserbestrahlung zu einem zweiten Auffangmittel. Dabei wird das erste Objekt und/oder das zweite Objekt derart transportiert, dass eine Position des zweiten Auffangmittels relativ zu dem ersten Auffangmittel einer Position des zweiten Objekts relativ zu dem ersten Objekt in dem Präparat entspricht. Dabei bedeutet eine Entsprechung der Relativposition der Auffangmittel und der Relativposition der Objekte nicht notwendig, dass die Relativpositionen identisch sind. Vielmehr ist die Relativposition der Auffangmittel gleich der mit einem Skalierungsfaktor vergrößerten Relativposition der Objekte. Indem die Relativposition der zu dem ersten bzw. zweiten Auffangmittel zu transportierenden Objekte einer Relativposition der Auffangmittel entspricht, ist es bei späteren Untersuchungen der aus dem Präparat herausgelösten Objekte möglich, aufgrund der Auffangmittel, denen das erste und zweite Objekt jeweils zugeordnet ist, eine Aussage über die Position des ersten und zweiten Objekts in dem Präparat vor dem Herauslösen zu treffen. So wird eine räumlich aufgelöste Untersuchung des Präparats ermöglicht.

Insbesondere wird die Entsprechung der Relativposition der Objekte und der Relativposition der Auffangmittel erreicht, indem die zu beschleunigenden Objekte gemäß der Relativposition der Auffangmittel ausgewählt werden. Dabei bezeichnet das Auswählen eines durch Laserbestrahlung aus dem Präparat herauszulösenden und zu beschleunigenden Objekts einen Vorgang vor dem eigentlichen Transportprozess und umfasst insbesondere die Festlegung eines Rands des herauszulösenden Objekts. Wenn das Objekt freipräpariert wird, definiert dieser Rand des herauszulösenden Objekts in der Regel die Schnittlinie, entlang derer das Objekt mit Laserbestrahlung aus dem umgebenden Präparat herausgelöst wird.

Das Transportieren des ersten und zweiten Objekts erfolgt derart, dass die Position des zweiten Auffangmittels relativ zu dem ersten Auffangmittel im Wesentlichen gleich der Position des zweiten Objekts relativ zu dem ersten Objekt an dem Präparat multipliziert mit einem Skalierungsfaktor ist. Der Skalierungsfaktor ist bestimmt durch einen charakteristischen Abstand von aus dem Präparat herauszulösenden Objekten und einen charakteristischen Abstand der Auffangmittel. Da die Relativposition der Auffangmittel in einer einfachen Beziehung zu der Relativposition der korrespondierenden Objekte an dem Präparat steht, können auch nach einem laserinduzierten Transportprozess von dem Präparat zu den Auffangmitteln Aussagen über die ursprüngliche relative Lage der zu den Auffangmitteln transportierten Objekte in dem Präparat getroffen werden. Es sollte beachtet werden, dass das erste und zweite Objekt im Allgemeinen flächig oder volumenmäßig ausgedehnte Objekte sein werden. Der Begriff "Position" wird in diesem Fall abkürzend für die Position eines charakteristischen Punkts des flächig oder volumenmäßig ausgedehnten Objekts verstanden, beispielsweise als Position des Flächenmittelpunkts oder des Volumenmittelpunkts des entsprechenden Objekts.

Das erfindungsgemäße Verfahren kann leicht auf eine beliebige Mehrzahl von Objekten erweitert werden. Insbesondere kann, falls ein drittes Auffangmittel zur Verfügung steht, ein dritten Objekts des Präparats durch Laserbestrahlung zu dem dritten Auffangmittel transportiert werden, wobei das das dritte Objekt wiederum derart ausgewählt wird, dass die Position des dritten Auffangmittels relativ zu dem ersten Auffangmittel im Wesentlichen gleich der Position des dritten Objekts relativ zu dem ersten Objekt an dem Präparat multipliziert mit dem Skalierungsfaktor ist. Das Verfahren kann entsprechend auf weitere Objekte des Präparats erweitert werden. Dadurch wird erreicht, dass sich die Morphologie des Präparats in der Verteilung der aus diesem herausgelösten Objekte in den verschiedenen Auffangmitteln widerspiegelt, in welche die Objekte durch Laserbestrahlung transportiert wurden. Somit wird gleichsam ein mit dem Skalierungsfaktor vergrößertes Abbild des ursprünglichen Präparats in den Auffangmitteln erzeugt, d.h. die Objekte des Präparats werden Muster erhaltend aus diesem herauskatapultiert.

Das erfindungsgemäße Verfahren ist für eine weitgehende Automatisierung eingerichtet. Insbesondere kann mit einer geeigneten Kamera, beispielsweise einer CCD-Kamera, ein Übersichtsbild des Präparats erzeugt und auf der Basis des Übersichtsbilds ein Präparatbereich ausgewählt werden. Die Auswahl des Präparatbereichs kann rechnergestützt automatisch oder durch Benutzerauswahl erfolgen. Anschließend können die durch Laserbestrahlung zu transportierenden Objekte vollständig automatisch oder teilweise automatisch ausgewählt werden. Insbesondere können in Abhängigkeit von den Abmessungen des ausgewählten Präparatbereichs und der Anzahl von verfügbaren Auffangmitteln die Ränder der aus dem Präparat herauszulösenden Objekte automatisch ermittelt werden, indem beispielsweise rechnergestützt Schnittlinien zum Herauslösen der Objekte festgelegt werden. In einem Ausführungsbeispiel definieren die Schnittlinien ein reguläres Gitter, so dass das Präparat entlang der Gitterlinien durch Laserbestrahlung geschnitten und anschließend gitterfeldweise zu korrespondierenden Auffangmitteln übertragen wird. Der laserinduzierte Transport von Objekten kann auch auf Objekte in einer Umgebung des ausgewählten Präparatbereichs erweitert werden, insbesondere dann, wenn die geometrische Form des ausgewählten Präparatbereichs von der der Anordnung von Auffangmitteln verschieden ist. In einem solchen Fall kann eine optimale Ausnutzung aller verfügbaren Auffangmittel bei gleichzeitiger Mustererhaltung erreicht werden. Nicht nur das Auswählen von zu den Auffangmitteln zu transportierenden Objekten, d.h. die Aufteilung des Präparats in eine gewisse Anzahl von Aliquots, sondern auch der durch Laserbestrahlung induzierte Transport kann automatisch und rechnergestützt erfolgen. Beispielsweise kann, nachdem die zu beschleunigenden Objekte auf der Basis des Übersichtsbilds ausgewählt wurden, eine Laserlichtquelle und eine Verstellvorrichtung für das Präparat derart angesteuert werden, dass eine Relativbewegung des Präparats zu einem Laserstrahl hervorgerufen wird und das zu transportierende Objekt entlang seines Rands von dem umgebenden Präparat freipräpariert wird.

Das Auswählen des ersten und/oder zweiten Objekts kann die Schritte Ermitteln einer Anzahl von Auffangmitteln entlang einer Achse, welche durch das erste und das zweite Auffangmittel definierten ist, Ermitteln einer Länge des Präparatbereichs in einer zu der Achse parallelen Richtung und Bestimmen einer Position des zweiten Objekts relativ zu dem ersten Objekt durch Multiplizieren des Quotienten aus der Länge des Präparatbereichs und der Anzahl von Auffangmitteln mit einer ganzen Zahl umfassen. Diese Schritte stellen insbesondere für den Fall einer regulären Anordnung von Auffangmitteln, beispielsweise der Anordnung von Wells einer Mikrotiterplatte auf den Gitterpunkten eines Gitterliniennetzes, ein einfaches Verfahren dar, um ausgehend von dem ersten Objekt die Position des zweiten Objekts zu bestimmen und so das zweite Objekt auszuwählen. Beispielsweise kann, bei einem vorgegebenen ersten Objekt, die Position des zweiten Objekts an dem Präparat aus der Anzahl von Auffangmitteln entlang einer gegebenen Achse der Anordnung von Auffangmitteln sowie der Ausdehnung des Präparats in der durch diese Achse definierten Richtung ermittelt werden. Bevorzugt ist die ganze Zahl gleich der Anzahl von entlang der Achse zwischen dem ersten Auffangmittel und dem zweiten Auffangmittel angeordneten Auffangmitteln plus 1. Durch diese Wahl wird bei einer Befüllung einer Mehrzahl von Auffangmitteln eine lückenlose Befüllung der Anordnung von Auffangmitteln ermöglicht.

Wenngleich für manche Anwendungen Objekte derart selektiert werden, dass sie näherungsweise gleiche Flächen in einer durch das Präparat definierten Ebene aufweisen, kann das Auswählen der zu transportierenden Objekte auch ein Bestimmen einer Dicke des Präparats in der Nähe der Positionen der jeweiligen Objekte umfassen, wobei die Objekte anschließend auf der Basis der ermittelten Dicke selektiert werden. Insbesondere kann ein Objekt derart selektiert werden, dass seine Fläche in einer durch das Präparat definierten Ebene näherungsweise umgekehrt proportional zur jeweils ermittelten Dicke des Präparats bei dem Objekt ist. Somit können Objekte mit näherungsweise gleichen Volumina selektiert und zu den korrespondierenden Auffangmitteln transportiert werden. Die Dickenbestimmung kann auf jede geeignete Weise, insbesondere mittels Bildanalyse, z.B. durch digitale holographische Interferometrie erfolgen.

Auch bei dem erfindungsgemäßen Verfahren kann der laserinduzierte Transportprozess von dem Präparat zu den Auffangmitteln auf verschiedene Weisen realisiert werden. Bei einem bevorzugten Ausführungsbeispiel ist die Strahlrichtung eines Laserstrahls, welcher zum Ausschneiden und/oder Beschleunigen der Objekte dient, fix, und das Präparat und die Auffangmittel werden relativ zu dem Laserstrahl positioniert. Bei einem anderen Ausführungsbeispiel ist die Position des Präparats fix, und die Strahlrichtung des Laserstrahls wird variiert. Insbesondere werden die Auffangmittel derart positioniert, dass bei dem laserinduzierten Transportprozess das entsprechende Auffangmittel entlang einer Strahlrichtung des Laserstrahls positioniert wird. Das Transportieren eines Objekts kann insbesondere ein Ausschneiden und/oder ein Beschleunigen durch Laserbestrahlung umfassen. Insbesondere umfasst der laserinduzierte Transportprozess bevorzugt eine laserinduzierte Beschleunigung. Somit kann das erfindungsgemäße Verfahren leicht durch in verschiedenen Betriebsmodi operierende Laser-Mikrodissektionssysteme ausgeführt werden.

Das Präparat ist bevorzugt ein biologisches Präparat, welches fest oder flüssig sein kann. Bei biologischen Präparaten sind räumlich aufgelöste Untersuchungen des Präparats besonders wünschenswert, um eine Variation von Eigenschaften gleichartiger Objekte, z.B. von Tumorzellen, in Abhängigkeit von einer räumlichen Position der Objekte in dem Präparat ermitteln zu können.

Insbesondere kann das Präparat ein Gewebeschnitt sein, beispielsweise ein histologischer Gewebeschnitt, welcher ein Tumorareal umfasst. Die Objekte sind in diesem Fall einzelne Tumorzellen oder Gruppen von Tumorzellen. Durch eine weitere Untersuchung der mit dem erfindungsgemäßen Verfahren aus dem Präparat separierten und zu den Auffangmitteln transportierten Tumorzellen lassen sich beispielsweise Aussagen über die unterschiedlichen Stadien der Tumorzellen treffen, die sich je nach ihrer Position deutlich unterschieden können. Mit Hilfe des erfindungsgemäßen Verfahrens kann ein Tumor detaillierter untersucht und eine bessere Analyse z.B. der Aggressivität von Tumorzellen vorgenommen werden. Da das erfindungsgemäße Verfahren weitgehend oder vollständig automatisiert werden kann, führt es auch zu einer Zeitersparnis derartiger Untersuchungen eines Tumors.

Das Präparat kann auch eine Zellkultur, beispielsweise ein Klon einer Stammzellkultur sein, welcher für eine weiterführende Bearbeitung in Subkulturen mit beispielsweise gleichen Volumina oder gleichen Zellzahlen aufgeteilt werden soll. Mit dem erfindungsgemäßen Verfahren können Klone einfach, schnell und effektiv in Subklone oder auch einzelne Zellen aufgeteilt werden und laserinduziert zu den gewünschten Auffangmitteln transportiert werden.

Das Präparat kann auch einen pflanzlichen Gewebeschnitt oder pflanzliche Zellen umfassen.

Das erfindungsgemäße Verfahren kann leicht an vielfältige verschiedene Ausführungen der Auffangmittel angepasst werden. Insbesondere können die Auffangmittel an einer Auffangvorrichtung angeordnet sein, wie beispielsweise die Vertiefungen (oder "Wells") einer Multiplatte mit 6, 12 oder 24 Wells oder einer Mikrotiterplatte mit 96, 384 oder mehr Wells. Die Mehrzahl von Auffangmitteln kann auch durch Abschnitte eines Mikrochips oder durch mit einem adhäsiven Mittel beschichtete Abschnitte einer Glasplatte oder eines sonstigen geeigneten Elements realisiert werden. Es kann auch eine Glasplatte oder ein anderer planarer Träger vorgesehen sein, welcher beispielsweise flächig mit einem adhäsiven Mittel beschichtet ist, wobei verschiedene Abschnitte oder Bereiche der Oberfläche der Glasplatte oder des planaren Trägers als Auffangmittel dienen. Insbesondere bei standardisierten Auffangmitteln, wie Mikrotiterplatten mit einer gegebenen Anzahl von Wells, kann die Anzahl und Relativposition von Auffangmitteln auch automatisch ermittelt werden, beispielsweise mit dem in der WO 04/045768 A der Anmelderin beschriebenen Verfahren, und der laserinduzierte Transport von Objekten von dem Präparat zu den Auffangmitteln kann somit weiter automatisiert werden.

Bei Ausführungsbeispielen wird eine Entsprechung der Relativposition der zu transportierenden Objekte und der Relativposition der Auffangmittel dadurch erreicht, dass die Relativposition der Auffangmittel bestimmt und die Objekte in Abhängigkeit von dieser ausgewählt werden.

Ein erfindungsgemäßes Mikrodissektionsverfahren nach einem der oben beschriebenen Ausführungsbeispiele kann weiterhin derart ausgestaltet sein, dass der Muster erhaltende Transfer eines ausgewählten Präparatbereichs auf verschiedene Weisen erfolgen kann.

In einem Modus wird der ausgewählte Präparatbereich vollständig in eine Mehrzahl von Objekten unterteilt, welche anschließend nach einem der oben beschriebenen Ausführungsbeispiele Muster erhaltend zu einer Mehrzahl von Auffangmitteln transportiert werden. In diesem Fall steht der gesamte ausgewählte Präparatbereich nach dem Transport zu den Auffangmitteln für weitere Untersuchungen oder eine weitere Kultivierung zur Verfügung. Insbesondere kann der ausgewählte Präparatbereich in eine Mehrzahl rechteckiger Objekte unterteilt werden, welche die gleiche Fläche aufweisen.

In einem weiteren Modus wird eine Mehrzahl von Objekten derart in dem ausgewählten Präparatbereich selektiert, dass die Mehrzahl von Objekten nicht den gesamten Präparatbereich überdeckt. Beispielsweise können Objekte mit Abmessungen gewählt werden, welche kleiner als ein charakteristischer Abstand der Objekte sind. Die Objekte können insbesondere mit einer rechteckigen oder runden oder beliebigen anderen Form ausgewählt werden. Die Auswahl der Fläche und/oder Form der Objekte kann beispielsweise benutzerdefiniert erfolgen. Insbesondere können die Objekte derart selektiert werden, dass sie näherungsweise die gleiche Fläche und Form aufweisen. Auch wenn in diesem Fall nicht der gesamte ausgewählte Präparatbereich in den Auffangmitteln für weitere Untersuchungen oder eine weitere Kultivierung zur Verfügung steht, ermöglicht dieses Verfahren eine räumlich aufgelöste Untersuchung des Präparatbereichs.

In einem noch weiteren Modus wird eine Mehrzahl von Objekten derart in dem ausgewählten Präparatbereich selektiert, dass die Objekte näherungsweise gleiche Volumina oder Zellzahlen aufweisen. Dazu wird, wie oben beschrieben, die Dicke des Präparats ermittelt und eine seitliche Größe der Objekte in Abhängigkeit von der ermittelten Dicke bestimmt. Auch bei dem Selektieren von Objekten mit näherungsweise gleichen Volumina oder Zellzahlen können die Objekte derart gewählt werden, dass sie zusammen nicht den gesamten ausgewählten Präparatbereich überdecken. Alternativ kann die seitliche Größe und Anzahl der zu transportierenden Objekte in Abhängigkeit von einer räumlich variierenden Dicke des ausgewählten Präparatbereichs auch derart eingestellt werden, dass der gesamte ausgewählte Präparatbereich in eine Mehrzahl von Objekten mit näherungsweise gleichen Volumina oder Zellzahlen unterteilt wird, welche dann mustererhaltend zu korrespondierenden Auffangmitteln transportiert werden. Auch im letzteren Fall kann die Unterteilung des ausgewählten Präparatbereichs in eine Mehrzahl von Objekten rechnergestützt und automatisch erfolgen.

Mit dem erfindungsgemäßen Verfahren kann nicht nur ein, sondern können mehrere Muster erhaltende Abbilder eines Präparatbereichs erzeugt werden. Dazu wird zusätzlich zu den ersten und zweiten Auffangmitteln eine Mehrzahl sekundärer Auffangmittel bereitgestellt. Ein sekundäres erstes Objekt, welches in dem Präparat in einer Umgebung des ersten Objekts angeordnet ist, wird zu dem ersten sekundären Auffangmittel transportiert und ein zweites sekundäres Objekt, welches in dem Präparat in einer Umgebung des zweiten Objekts angeordnet ist, wird zu dem zweiten sekundären Auffangmittel transportiert, wobei der Transport wiederum derart erfolgt, dass eine Position des zweiten sekundären Auffangmittels relativ zu dem ersten sekundären Auffangmittel einer Position des zweiten sekundären Objekts relativ zu dem ersten sekundären Objekt in dem Präparat entspricht. Mit diesem Verfahren werden Objekte des Präparats Muster erhaltend zu einer Mehrzahl von Auffangmitteln und zu einer Mehrzahl von sekundären Auffangmitteln transportiert. Sowohl an den Auffangmitteln als auch an den sekundären Auffangmitteln stehen sie für weitere Untersuchungen oder eine weitere Kultivierung zur Verfügung. Das erfindungsgemäße Mikrodissektionsverfahren kann entsprechend auf noch zusätzliche Gruppen von Auffangmitteln und eine entsprechend größere Anzahl von Muster erhaltenden Abbildern erweitert werden.

In der Praxis kann, anstelle einer Selektion von zu transportierenden sekundären Objekten, jeweils in einer Umgebung der korrespondierenden, zu transportierenden Objekte, eine Mehrzahl von Objekten wie nach dem oben beschriebenen Mikrodissektionsverfahren selektiert und anschließend jeweils in eine vorgegebene Anzahl, beispielsweise vier, von Unterobjekten unterteilt werden. Anschließend werden die ersten Unterobjekte jedes der Objekte zu korrespondierenden Auffangmitteln der Mehrzahl von Auffangmitteln transportiert und die zweiten Unterobjekte jedes der Objekte zu korrespondierenden sekundären Auffangmitteln der Mehrzahl von sekundären Auffangmitteln transportiert, etc.

Alle oben beschriebenen Ausführungsbeispiele für das erfindungsgemäße Mikrodissektionsverfahren können entsprechend auch auf den Transport von sekundären Objekten zu den entsprechenden sekundären Auffangmitteln angewandt werden.

Ein erfindungsgemäßes Mikrodissektionssystem umfasst Stützmittel zum Stützen eines ersten Auffangmittels und eines zweiten Auffangmittels, die jeweils zum Auffangen eines aus dem Präparat herausgelösten Objekts eingerichtet sind, wobei die ersten und zweiten Auffangmittel eine vordefinierte räumliche Anordnung zueinander aufweisen, eine Laserlichtquelle zur Erzeugung eines Laserstrahls zum Beschleunigen von Objekten des Präparats, und mit der Laserlichtquelle gekoppelte Steuermittel, die eingerichtet sind, um die Laserlichtquelle derart anzusteuern, dass das erste Objekt und/oder das zweite Objekt derart zu dem ersten Auffangmittel bzw. dem zweiten Auffangmittel transportiert wird, dass eine Position des zweiten Auffangmittels relativ zu dem ersten Auffangmittel einer Position des zweiten Objekts relativ zu dem ersten Objekt in dem Präparat entspricht. Dazu umfasst das Mikrodissektionssystem Detektionsmittel zum Ermitteln der Position des zweiten Auffangmittels relativ zu dem ersten Auffangmittel, wobei die Steuermittel eingerichtet sind, um über eine Verstellvorrichtung eine Positionsänderung des Präparats in Abhängigkeit von der von den Detektionsmitteln ermittelten Position des zweiten Auffangmittels relativ zu dem ersten Auffangmittel hervorzurufen. Somit ist das erfindungsgemäße Mikrodissektionssystem eingerichtet, um zwischen laserinduzierten Transportprozessen von Objekten zu dem ersten bzw. zweiten Auffangmittel das Präparat derart zu repositionieren, dass die Relativposition der ersten und zweiten Auffangmittel die Relativposition des ersten und zweiten Objekts an dem Präparat widerspiegelt. Damit wird eine räumliche Zuordnung von zu den Auffangmitteln transportierten Objekten zu ihren ursprünglichen Positionen in dem Präparat erleichtert.

Die Steuermittel sind eingerichtet, um die von den Detektionsmitteln ermittelte Relativposition des zweiten Auffangmittels und des ersten Auffangmittels durch einen Skalierungsfaktor zu dividieren, um so einen Positionsänderungswert zu erzeugen und die Verstellvorrichtung derart anzusteuern, dass die Position des Präparats um den Positionsänderungswert geändert wird. Der Skalierungsfaktor kann von einem Benutzer vorgegeben oder von den Steuermitteln automatisch ermittelt werden. Durch diese Ausgestaltung der Steuermittel wird auf eine einfache Weise ein Muster erhaltendes Katapultieren auch für eine Vielzahl von Objekten von dem Präparat zu den entsprechenden Auffangmitteln ermöglicht.

Die Detektionsmittel können auch derart ausgestaltet sein, dass eine Relativposition von Auffangmitteln und möglicherweise eine Gesamtanzahl verfügbarer Auffangmittel automatisch ermittelt wird. Dies kann, wie bereits oben erwähnt, beispielsweise durch das in der WO 04/045768 A beschriebene System erreicht werden, wobei beispielsweise eine Mikrotiterplatte anhand eines Bar-Codes identifiziert wird. Diese Ausgestaltung der Detektionsmittel ermöglicht eine noch weitergehende Automatisierung des laserinduzierten Transferprozesses.

Weiter kann das Mikrodissektionssystem mit den Steuermitteln gekoppelte Dickenbestimmungsmittel umfassen, welche eingerichtet sind, um eine Dicke des Präparats in der Nähe des ersten Objekts und/oder des zweiten Objekts zu ermitteln. Die Steuermittel sind mit der Verstellvorrichtung und/oder der Laserlichtquelle gekoppelt und eingerichtet, um eine laterale Größe des zu beschleunigenden ersten und/oder zweiten Objekts in Abhängigkeit von der ermittelten Dicke des Präparats einzustellen. Ein derart ausgestaltetes Mikrodissektionssystem ermöglicht laserinduzierten Transport von Objekten mit näherungsweise konstanten Volumina und/oder Zellzahlen.

Das erfindungsgemäße Mikrodissektionsverfahren und Mikrodissektionssystem kann zur Untersuchung beliebiger Präparate, insbesondere biologischer Präparate eingesetzt werden. Insbesondere können das erfindungsgemäße Mikrodissektionsverfahren und Mikrodissektionssystem zur Untersuchung von Präparaten eingesetzt werden, bei welchen eine räumlich aufgelöste Untersuchung des Präparats gewünscht wird. Das erfindungsgemäße Mikrodissektionsverfahren kann sowohl in aufrechten als auch in inversen Mikroskopen eingesetzt werden.

Bevorzugte Ausführungsbeispiele der Erfindung werden nachfolgend unter Bezugnahme auf die Figuren beschrieben.
Figur 1 veranschaulicht das grundlegende Prinzip eines Mikrodissektionsverfahrens nach einem Ausführungsbeispiel der Erfindung.
Figur 2 ist eine schematische Darstellung einzelner Schritte der Durchführung eines Mikrodissektionsverfahrens nach einem Ausführungsbeispiel der Erfindung.
Figur 3 ist eine schematische Darstellung zur Erläuterung einzelner Schritte eines Mikrodissektionsverfahrens nach einem anderen Ausführungsbeispiel der Erfindung.

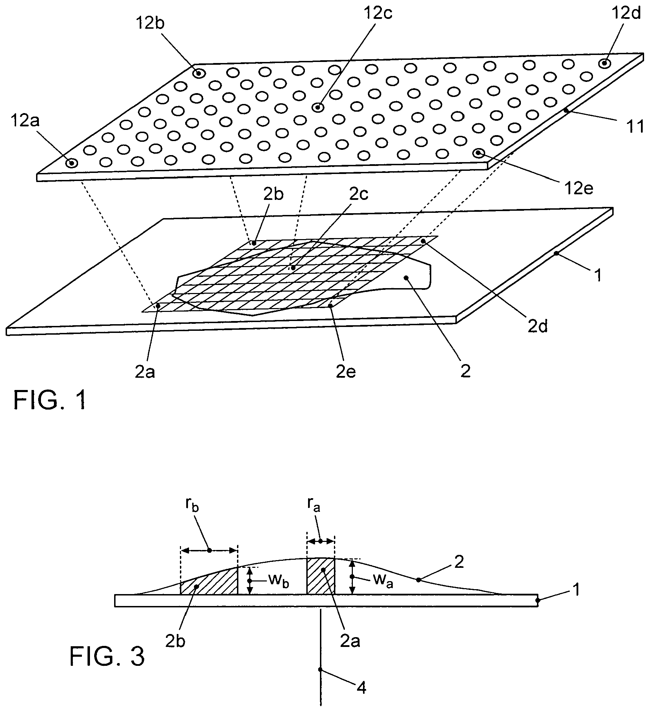

Figur 1 veranschaulicht das grundlegende Prinzip eines erfindungsgemäßen Mikrodissektionsverfahrens. Auf einem Träger 1, z.B. eine Polymerfolie oder ein Glasträger mit mit einer möglicherweise zusätzlich darauf angeordneten laserlichtabsorbierenden Folie, ist ein biologisches Präparat 2, beispielsweise ein histologischer Gewebeschnitt, angebracht. Eine Mikrotiterplatte 11 weist eine Mehrzahl von Wells 12A-E auf.

Objekte 2 a-e werden durch laserinduzierte Transportprozesse von dem biologischen Präparat 2 zu den Wells 12a-e der Mikrotiterplatte 11 transportiert. Erfindungsgemäß werden die Objekte wie in Anspruch 1 angegeben ausgewählt. Wie durch die die Objekte 2 a-e mit den korrespondierenden Wells 12a-e verbindenden Linien schematisch dargestellt, erfolgt dieser Transport auf eine solche Weise, dass eine räumliche Anordnung der Wells 12a-e der räumlichen Anordnung der Objekte 2a-e an dem Träger 1 entspricht, wenngleich aufgrund der im Vergleich mit den Abständen zwischen den Objekten 2a-e größeren Abstände zwischen den korrespondierenden Wells 12a-e die relativen Positionen mit einem Skalierungsfaktor vergrößert sind.

Nachdem die Objekte 2a-e, sowie evtl. die nicht mit Bezugszeichen versehenen, schematisch angedeuteten weiteren Objekte des Präparats, durch Laserbestrahlung von dem Träger 1 zu den korrespondierenden Wells der Mikrotiterplatte 11 transportiert worden sind, entspricht die geometrische Anordnung der in den Wells der Mikrotiterplatte 11 aufgefangenen Objekte der ursprünglichen geometrischen Anordnung der Objekte auf dem Träger, vergrößert mit dem Skalierungsfaktor. Bei weiteren Untersuchungen der in den einzelnen Wells aufgefangenen Objekte können somit einfach Rückschlüsse auf die räumliche Anordnung der Objekte in dem ursprünglichen Präparat gezogen werden.

Ist das biologische Präparat 2 beispielsweise ein histologischer Gewebeschnitt, welcher ein Tumorareal umfasst, so lassen sich so bei weiteren Untersuchungen der zu der Mikrotiterplatte 11 transportierten Objekte, welche typischerweise jeweils einzelne Zellen oder mehrere Zellen sind, Aussagen über die unterschiedlichen Stadien von Tumorzellen treffen, die sich je nach ihrer Lage deutlich unterscheiden können. So sind meist randständige Zellen aggressiver und neigen zur Metastatisierung, während zentraler gelegene Zellen teilweise sogar absterben. Mit Hilfe des oben skizzierten Verfahrens kann daher ein Tumor detaillierter untersucht werden und somit eine verbesserte Analyse zur Aggressivität des Tumors durchgeführt werden.

Es sollte beachtet werden, dass bei dem in Figur 1 gezeigten Ausführungsbeispiel ein Abschnitt des Präparats vollständig in Felder unterteilt wird, welche die zu transportierenden Objekte definieren, und die Felder, und somit der entsprechende Abschnitt des Präparats, vollständig zu den Auffangmitteln transportiert wird bzw. werden.

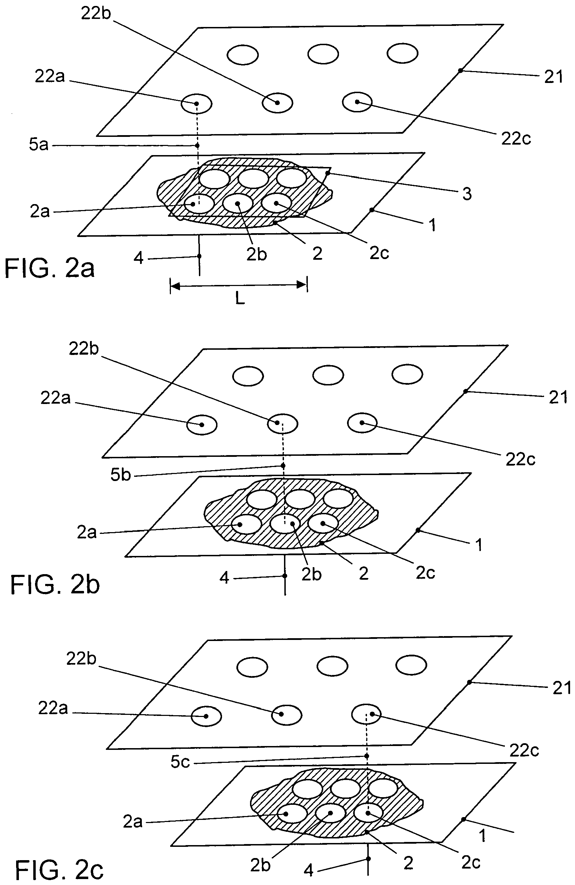

Nachfolgend wird unter Bezugnahme auf Figur 2 das Mikrodissektionsverfahren detaillierter erläutert werden.

Die Auffangvorrichtung von Figur 2 ist eine 6-Well-Platte 21, die eine Mehrzahl von Wells 22a-c aufweist. Die Anzahl und Anordnung der Wells kann entweder von einem Benutzer in einen Computer des Mikrodissektionssystems eingegeben oder von dem Mikrodissektionssystem automatisch ermittelt werden, beispielsweise durch an der 6-Well-Platte 21 angebrachte Informationen in der Form eines Bar-Codes.

Auf der Basis eines mit einer geeigneten Kamera aufgenommenen Übersichtsbilds des biologischen Präparats 2, welches auf einem mit dem Computer gekoppelten Bildschirm wiedergegeben wird, wird ein Präparatbereich entweder durch Benutzereingabe oder automatisch mit einer umlaufenden Linie 3 gekennzeichnet. Auf der Basis des Übersichtsbilds und der Information über die Anzahl und Anordnung der Wells ermittelt der Computer automatisch die Position der Flächenmittelpunkte der Objekte 2a-c, die von dem Präparat zu der 6-Well-Platte 21 transportiert werden sollen. Dazu wird ausgehend von der Anzahl der entlang der durch die Wells 22a und 22b definierten Achse angeordneten Wells, in diesem Fall drei, und der Ausdehnung L des Präparats in einer Richtung parallel zu der Achse ein Abstand zwischen benachbarten Objekten 2a und 2b bzw. 2b und 2c als L/3 berechnet. Analog kann für jedes der zu transportierenden Objekte die Relativposition des Flächenmittelpunkts zu demjenigen des ersten Objekts 2a ausgehend von den Abmessungen des Präparatbereichs und der Anzahl und Anordnung von Wells an der 6-Well-Platte 21 berechnet werden. Durch diese Verfahrensschritte wird eine Position der Flächenmittelpunkte der Objekte 2a-c ermittelt. Die zum Selektieren des Objekts darüber hinaus benötigte Information über eine laterale Größe des Objekts kann entweder benutzerdefiniert für alle Objekte gleich, für alle Objekte individuell oder automatisch festgelegt werden.

Bei dem in Figur 2 gezeigten Ausführungsbeispiel weisen die Objekte 2a-c eine Größe auf, welche kleiner als der charakteristische Abstand zwischen den Objekten ist. Somit wird bei diesem Ausführungsbeispiel nicht der gesamte ausgewählte Präparatbereich zu den Auffangmitteln transportiert.

Wie aus Figur 2a ersichtlich, ist die Relativposition des zweiten Objekts 2b zu dem ersten Objekt 2a gleich der Relativposition des zweiten Auffangmittels 22b zu dem ersten Auffangmittel 22a dividiert durch einen Skalierungsfaktor, und die Relativposition des dritten Objekts 2c zu dem ersten Objekt 2a ist gleich der Relativposition des dritten Auffangmittels 22c zu dem ersten Auffangmittel 22a dividiert durch denselben Skalierungsfaktor. In dem dargestellten Beispiel ist der Skalierungsfaktor bestimmt durch den Abstand der Wells, die Anzahl der Wells und die Länge L des ausgewählten Präparatbereichs.

Der Skalierungsfaktor kann im Allgemeinen von der Raumrichtung abhängen, insbesondere wenn die geometrische Form des ausgewählten Präparatbereichs sich wesentlich von der geometrischen Form der Anordnung von Wells unterscheidet. In diesem Fall ist es vorteilhaft, dass für jede Raumrichtung separat die Relativpositionen der in der entsprechenden Raumrichtung benachbarten Objekte wie oben beschrieben ermittelt werden.

Nach der Selektierung der durch Laserbestrahlung zu transportierenden Objekte 2a-c steuert der Computer einen motorangetriebenen Mikroskoptisch, auf welchem der Träger 1 angeordnet ist, derart an, dass sich der Träger 1 mit dem Präparat 2 relativ zu einem Laserstrahl 4 bewegt und der Laserstrahl den Rand eines selektierten Objekts durchfährt und somit das Objekt freipräpariert. Zusätzlich wird eine Stützvorrichtung für die 6-Well-Platte 21 derart angesteuert, dass der zu dem ausgeschnittenen Objekt korrespondierende Well entlang der Strahlrichtung des Laserstrahls 4 positioniert wird. Diese Situation ist in Figur 2 (A) schematisch für das Objekt 2a dargestellt. Nach dem Ausschneiden des Objekts 2a wird das Objekt 2a durch einen Laserschuss entlang der Bahnkurve 5a zu dem Well 22a beschleunigt. Der Laserschuss ist dabei bevorzugt, aber nicht notwendig auf den Flächenmittelpunkt des Objekts gerichtet.

Anschließend wird das Ausschneiden und Katapultieren für die Objekte 2b und 2c wiederholt, indem der Mikroskoptisch und die Stützvorrichtung der 6-Well-Platte entsprechend angesteuert werden, wie schematisch in den Figuren 2 (B) und 2 (C) gezeigt.

Natürlich können zahlreiche Abwandlungen an dem anhand von Figur 2 nur schematisch dargestellten Verfahren vorgenommen werden. Beispielsweise müssen die Objekte 2a-c nicht notwendigerweise beabstandete, kreisförmige Objekte sein. Vielmehr können die Objekte beliebige Formen aufweisen und können, wie in Figur 1 gezeigt, aneinander grenzen. Insbesondere kann, wie ebenfalls in Figur 1 gezeigt, ein Präparatbereich vollständig in eine Vielzahl von Feldern unterteilt werden, die dann nacheinander zu korrespondierenden Wells transportiert werden.

Unter Bezugnahme auf Figur 3 wird nachfolgend ein Mikrodissektionsverfahren nach einem anderen Ausführungsbeispiel der Erfindung beschrieben. Nach den unter Bezugnahme auf die schematischen Darstellungen von Figur 1 und Figur 2 erläuterten Mikrodissektionsverfahren werden Objekte selektiert, welche näherungsweise konstante oder wenigstens vergleichbare Flächen aufweisen. Bei anderen Anwendungen kann es jedoch wünschenswert oder notwendig sein, Objekte mit vergleichbarer Zellenzahl oder vergleichbarem Volumen zu selektieren.

Zu diesem Zweck kann nach einer Bestimmung der Positionen der Objekte 2a-c nach dem oben beschriebenen Verfahren eine laterale Größe der Objekte in Abhängigkeit von einer Dicke des Präparats bei den jeweiligen Objekten eingestellt werden, so dass Objekte mit näherungsweise konstantem Volumen selektiert und zu den Auffangmitteln transportiert werden. Dazu sind Dickenbestimmungsmittel, z.B. in der Form eines Digitalen holographischen Interferometers, vorgesehen, welche die Dicke wₐ, w_{b} des Präparats in der Nähe der entsprechenden Objekte 2a, 2b bestimmen. Auf der Basis der Dicken wₐ, w_{b} berechnet der Computer dann laterale Abmessungen rₐ, r_{b} der entsprechenden Objekte in der Ebene des Präparats. Falls es insbesondere erforderlich ist, Objekte mit vergleichbaren Volumina zu den Wells zu transportieren, wird die laterale Abmessung der Objekte 2a, 2b so gewählt, dass die Fläche der Objekte in der Ebene des Präparats näherungsweise umgekehrt proportional zu den entsprechenden Dicken ist.

Eine derartige dickenabhängige Selektierung von Objekten kann insbesondere in der Stammzellforschung Anwendung finden. In einer Stammzellkultur entstehen oft Klone, welche zu einer weiterführenden Bearbeitung oder Untersuchung in Subkulturen aufgeteilt werden sollen. Pro Subklon ist eine bestimmte Anzahl von Zellen, beispielsweise mindestens 50, nötig, damit der Subklon weiter wachsen kann. Das oben beschriebene Verfahren ermöglicht eine automatische Einstellung der Zellzahl in selektierten Subklonen.

Es sollte beachtet werden, dass, während die obigen Ausführungsbeispiele jeweils nur eine Mikrotiterplatte 11 bzw. eine 6-Well-Platte 21 mit jeweils einer Mehrzahl von Auffangmitteln zeigen, auch mehrere derartige Mikrotiterplatten oder Multi-WellPlatten zum Auffangen von Objekten vorgesehen sein können. In diesem Fall können auch mehrere Muster erhaltende Abbilder des Präparats erzeugt werden.

Unter Bezugnahme auf Figur 1 kann beispielsweise jedes der Felder 2a-e, d.h., jedes der Objekte, in eine Mehrzahl von Unterobjekten unterteilt und jedes der Unterobjekte entsprechend freipräpariert werden. Dann wird ein erstes Unterobjekt des Objekts 2a zu dem Well 12a der Mikrotiterplatte 11 transportiert, während ein zweites Unterobjekt des Objekts 2a zu einem entsprechend angeordneten Well einer (nicht gezeigten) sekundären Mikrotiterplatte transportiert wird, welche zur Mikrotiterplatte 11 identisch ist. Entsprechend werden die Unterobjekte der anderen Objekte zu den korrespondierenden Wells der Mikrotiterplatte und der (nicht gezeigten) sekundären Mikrotiterplatte transportiert. Das heißt, die ersten Unterobjekte werden wie die Objekte des oben beschriebenen Verfahrens zu den Auffangmitteln transportiert, und die zweiten Unterobjekte werden als sekundäre Objekte zu sekundären Auffangmitteln transportiert, wobei dieser Transport wiederum entsprechend dem oben beschriebenen Verfahren erfolgt. Diese Abwandlung des oben beschriebenen Verfahrens kann leicht auf eine noch größere Anzahl von Mikrotiterplatten erweitert werden.

## Patentansprüche

1. Mikrodissektionsverfahren, umfassend die Schritte
Bereitstellen eines Präparats (2),
Bereitstellen einer Mehrzahl von Auffangmitteln (12a-e; 22a-c) zum Auffangen eines aus dem Präparat herausgelösten Objekts (2a-e; 2a-c), wobei die Mehrzahl von Auffangmitteln (12a-e; 22a-c) eine vordefinierte räumliche Anordnung zueinander aufweist,
Ermitteln einer Position eines zweiten Auffangmittels (12b; 22b) relativ zu einem ersten Auffangmittel (12a; 22a) der Mehrzahl von Auffangmitteln (12a-e; 22a-c), Transportieren eines ersten Objekts (2a) des Präparats zu dem ersten Auffangmittel (12a; 22a) und Transportieren eines vom ersten Objekt verschiedenen zweiten Objekts (2b) des Präparats zu dem zweiten Auffangmittel (12b; 22b), jeweils durch Laserbestrahlung,
wobei das erste Objekt (2a) und/oder das zweite Objekt (2b) derart zu dem ersten Auffangmittel (12a; 22a) bzw. dem zweiten Auffangmittel (12b; 22b) transportiert wird, dass eine Position des zweiten Auffangmittels (12b; 22b) relativ zu dem ersten Auffangmittel (12a; 22a) einer Position des zweiten Objekts (2b) relativ zu dem ersten Objekt (2a) in dem Präparat entspricht,
**dadurch gekennzeichnet**
**dass** das zu transportierende erste Objekt (2a) und/oder zweite Objekt (2b) in Abhängigkeit von der ermittelten Position des zweiten Auffangmittels (12b; 22b) relativ zu dem ersten Auffangmittel (12a; 22a) ausgewählt wird, und
**dass** die Position des zweiten Auffangmittels (12b; 22b) relativ zu dem ersten Auffangmittel (12a; 22a) durch einen Skalierungsfaktor dividiert wird, um so einen Positionsänderungswert zu erzeugen, und dass eine Verstellvorrichtung zur Positionierung des Präparats (2) derart angesteuert wird, dass die Position des Präparats (2) um den Positionsänderungswert geändert wird, so dass die Position des zweiten Auffangmittels (12b; 22b) relativ zu dem ersten Auffangmittel (12a; 22a) gleich der mit dem Skalierungsfaktor vergrößerten Relativposition der ersten und zweiten Objekte (2a, 2b) in dem Präparat (2) ist.

2. Mikrodissektionsverfahren nach Anspruch 1,
**dadurch gekennzeichnet,**
**dass** der Skalierungsfaktor von einem Benutzer vorgegeben ist oder von Steuermitteln automatisch ermittelt wird..

3. Mikrodissektionsverfahren nach Anspruch 1 oder Anspruch 2, **gekennzeichnet durch** den Schritt
Transportieren eines dritten Objekts (2c) des Präparats zu einem dritten Auffangmittel (12c; 22c) **durch** Laserbestrahlung,
**dadurch** gekennzeichnet,
dass das dritte Objekt (2c) derart transportiert wird, dass die Position des dritten Auffangmittels (12c; 22c) relativ zu dem ersten Auffangmittel (12a; 22a) im Wesentlichen gleich der Position des dritten Objekts (2c) relativ zu dem ersten Objekt (2a) in dem Präparat multipliziert mit dem Skalierungsfaktor ist.

4. Mikrodissektionsverfahren nach einem der vorhergehenden Ansprüche, **gekennzeichnet durch** die Schritte
Aufnehmen eines Übersichtsbilds wenigstens eines Abschnitts des Präparats und Auswählen eines Präparatbereichs auf der Basis des Übersichtsbilds,
wobei das zu transportierende erste und zweite Objekt (2a, 2b) in dem Präparatbereich ausgewählt wird.

5. Mikrodissektionsverfahren nach Anspruch 4,
**dadurch gekennzeichnet,**
**dass** das Auswählen des ersten und/oder zweiten Objekts (2a, 2b) umfasst:
Ermitteln einer Anzahl von Auffangmitteln entlang einer Achse, welche durch das erste (12a; 22a) und das zweite Auffangmittel (12b; 22b) definierten ist,
Ermitteln einer Länge (L) des Präparatbereichs in einer zu der Achse parallelen Richtung, und
Bestimmen einer Position des zweiten Objekts (2b) relativ zu dem ersten Objekt (2a) durch Multiplizieren des Quotienten aus der Länge des Präparatbereichs (L) und der Anzahl von Auffangmitteln mit einer ganzen Zahl.

6. Mikrodissektionsverfahren nach Anspruch 5,
**dadurch gekennzeichnet,**
**dass** die ganze Zahl gleich der Anzahl von entlang der Achse zwischen dem ersten Auffangmittel (12a; 22a) und dem zweiten Auffangmittel (12b; 22b) angeordneten Auffangmitteln plus 1 ist.

7. Mikrodissektionsverfahren nach einem der vorhergehenden Ansprüche, **gekennzeichnet durch** den Schritt
Ermitteln einer Dicke (wₐ, w_{b}) des Präparats jeweils in der Nähe des ersten bzw. zweiten Objekts (2a, 2b),
wobei das erste bzw. zweite Objekt (2a, 2b) derart ausgewählt wird, dass eine Fläche des ersten bzw. zweiten Objekts (2a, 2b) in Abhängigkeit von der jeweils ermittelten Dicke (wₐ, w_{b}) des Präparats in der Nähe des ersten bzw. zweiten Objekts (2a, 2b) eingestellt wird.

8. Mikrodissektionsverfahren nach Anspruch 7,
**dadurch gekennzeichnet,**
**dass** die Dicke des Präparats (wₐ, w_{b}) in der Nähe des ersten bzw. zweiten Objekts (2a, 2b) durch digitale holographische Interferometrie ermittelt wird.

9. Mikrodissektionsverfahren nach einem der vorhergehenden Ansprüche,
**dadurch gekennzeichnet,**
**dass** das Transportieren des ersten bzw. zweiten Objekts (2a, 2b) ein Schneiden des Präparats und/oder ein Beschleunigen des ersten bzw. zweiten Objekts (2a, 2b) durch Laserbestrahlung umfasst.

10. Mikrodissektionsverfahren nach einem der vorhergehenden Ansprüche,
**dadurch gekennzeichnet,**
**dass** das Präparat ein biologisches Präparat (2) ist.

11. Mikrodissektionsverfahren nach einem der vorhergehenden Ansprüche,
**dadurch gekennzeichnet,**
**dass** das Präparat einen Gewebeschnitt umfasst.

12. Mikrodissektionsverfahren nach einem der Ansprüche 1-10,
**dadurch gekennzeichnet,**
**dass** das Präparat eine Zellkultur umfasst.

13. Mikrodissektionsverfahren nach einem der vorhergehenden Ansprüche, **gekennzeichnet durch** die Schritte
Bereitstellen einer Mehrzahl von sekundären Auffangmitteln zum Auffangen eines aus dem Präparat herausgelösten Objekts, wobei die Mehrzahl von sekundären Auffangmitteln eine vordefinierte räumliche Anordnung zueinander aufweist, Transportieren eines ersten sekundären Objekts des Präparats zu einem ersten sekundären Auffangmittel und Transportieren eines zweiten sekundären Objekts des Präparats zu einem zweiten sekundären Auffangmittel, jeweils **durch** Laserbestrahlung,
wobei das erste sekundäre Objekt und/oder das zweite sekundäre Objekt derart zu dem ersten sekundären Auffangmittel bzw. dem zweiten sekundären Auffangmittel transportiert wird, dass eine Position des zweiten sekundären Auffangmittels relativ zu dem ersten sekundären Auffangmittel einer Position des zweiten sekundären Objekts relativ zu dem ersten sekundären Objekt in dem Präparat entspricht, und wobei das erste sekundäre Objekt in dem Präparat in der Nähe des ersten Objekts angeordnet ist und das zweite sekundäre Objekt in dem Präparat in der Nähe des zweiten Objekts angeordnet ist.

14. Mikrodissektionsverfahren nach einem der vorhergehenden Ansprüche,
**dadurch gekennzeichnet,**
**dass** das erste und zweite Auffangmittel jeweils ein Well einer Mikrotiterplatte ist.

15. Mikrodissektionsverfahren nach einem der Ansprüche 1 bis 13,
**dadurch gekennzeichnet,**
**dass** das erste und zweite Auffangmittel jeweils ein Abschnitt eines mit einem adhäsiven Mittel beschichteten planaren Trägers oder eines unbeschichteten planaren Trägers ist.

16. Mikrodissektionssystem, umfassend
Haltemittel zum Halten eines Präparats (2),
Stützmittel zum Stützen eines ersten Auffangmittels (12a; 22a) und eines zweiten Auffangmittels (12b; 22b), welche jeweils zum Auffangen eines aus dem Präparat herausgelösten Objekts eingerichtet sind, wobei die ersten und zweiten Auffangmittel (12a, 12b; 22a, 22b) eine vordefinierte räumliche Anordnung zueinander aufweisen, eine Laserlichtquelle zur Erzeugung eines Laserstrahls (4), um ein erstes Objekt (2a) bzw. ein zweites Objekt (2b) des von den Haltemitteln zu haltenden Präparats zu den ersten (12a; 22a) bzw. zweiten Auffangmitteln (12b; 22b) zu transportieren, Steuermittel, welche eingerichtet sind, um die Laserlichtquelle derart anzusteuern, dass das erste Objekt (2a) und/oder das zweite Objekt (2b) derart zu dem ersten Auffangmittel (12a; 22a) bzw. dem zweiten Auffangmittel (12b; 22b) transportiert wird, dass eine Position des zweiten Auffangmittels (12b; 22b) relativ zu dem ersten Auffangmittel (12a; 22a) einer Position des zweiten Objekts (2b) relativ zu dem ersten Objekt (2a) in dem Präparat entspricht,
Detektionsmittel zum Ermitteln der Position des von den Stützmitteln zu stützenden zweiten Auffangmittels (12b; 22b) relativ zu dem von den Stützmitteln zu stützenden ersten Auffangmittel (12a; 22a),
**dadurch gekennzeichnet,**
**dass** die Steuermittel eingerichtet sind, um zur Bestimmung eines Positionsänderungswerts die von den Detektionsmitteln ermittelte Position des zweiten Auffangmittels (12b; 22b) relativ zu dem ersten Auffangmittel (12a; 22a) durch einen Skalierungsfaktor zu dividieren, und
**dass** die Steuermittel zur automatischen Ansteuerung einer Verstellvorrichtung zur Positionierung des Präparats (2) eingerichtet sind, um über die Verstellvorrichtung eine Positionsänderung des Präparats um den Positionsänderungswert hervorzurufen, so dass die Position des zweiten Auffangmittels (12b; 22b) relativ zu dem ersten Auffangmittel (12a; 22a) gleich der mit dem Skalierungsfaktor vergrößerten Relativposition der ersten und zweiten Objekte (2a, 2b) in dem Präparat (2) ist.

17. Mikrodissektionssystem nach Anspruch 16,
**dadurch gekennzeichnet,**
**dass** die Detektionsmittel zum automatischen Ermitteln einer Position des zweiten Auffangmittels (12b; 22b) relativ zu dem ersten Auffangmittel (12a; 22a) eingerichtet sind.

18. Mikrodissektionssystem nach Anspruch 16 oder Anspruch 17, **gekennzeichnet durch**
mit den Steuermitteln gekoppelte Dickenbestimmungsmittel, welche eingerichtet sind, um eine Dicke des Präparats (wₐ, w_{b}) in der Nähe des ersten Objekts (2a) und/oder zweiten Objekts (2b) zu ermitteln,
wobei die Steuermittel eingerichtet sind, um eine laterale Größe (r_{a,} r_{b}) des zu transportierenden ersten (2a) und/oder zweiten Objekts (2b) jeweils in Abhängigkeit von der ermittelten Dicke des Präparats (wₐ, w_{b}) einzustellen.

19. Mikrodissektionssystem nach einem der Ansprüche 16-18,
**dadurch gekennzeichnet,**
**dass** das Mikrodissektionssystem zur Durchführung des Verfahrens nach einem der Ansprüche 1-15 eingerichtet ist.

## Claims

1. Microdissection method, comprising the steps of providing a preparation (2),
providing a plurality of capturing means (12a-e; 22a-c) for capturing an object (2a-e; 2a-c) which has been detached from the preparation, wherein the plurality of capturing means (12a-e; 22a-c) have a predefined spatial arrangement with respect to one another,
ascertaining a position of a second capturing means (12b; 22b) relative to a first capturing means (12a; 22a) of the plurality of capturing means (12a-e; 22a-c), transporting a first object (2a) of the preparation to the first capturing means (12a; 22a) and transporting a second object (2b) of the preparation, which differs from the first object, to the second capturing means (12b; 22b), in each case by laser irradiation,
wherein the first object (2a) and/or the second object (2b) is transported to the first capturing means (12a; 22a) and the second capturing means (12b; 22b), respectively, in a manner such that a position of the second capturing means (12b; 22b) relative to the first capturing means (12a; 22a) corresponds to a position of the second object (2b) relative to the first object (2a) in the preparation,
**characterized**
**in that** the first object (2a) and/or second object (2b) to be transported is selected in dependence on the ascertained position of the second capturing means (12b; 22b) relative to the first capturing means (12a; 22a), and
**in that** the position of the second capturing means (12b; 22b) relative to the first capturing means (12a; 22a) is divided by a scaling factor to produce in this way a position change value, and in that an adjustment apparatus for positioning the preparation (2) is actuated such that the position of the preparation (2) is changed by the position change value, with the result that the position of the second capturing means (12b; 22b) relative to the first capturing means (12a; 22a) is identical to the relative position of the first and second objects (2a, 2b) in the preparation (2), enlarged by the scaling factor.

2. Microdissection method according to Claim 1,
**characterized**
**in that** the scaling factor is prescribed by a user or is automatically ascertained by control means.

3. Microdissection method according to Claim 1 or Claim 2,
**characterized by** the step
transporting a third object (2c) of the preparation to a third capturing means (12c; 22c) by laser irradiation,
**characterized**
**in that** the third object (2c) is transported such that the position of the third capturing means (12c; 22c) relative to the first capturing means (12a; 22a) is substantially identical to the position of the third object (2c) relative to the first object (2a) in the preparation multiplied by the scaling factor.

4. Microdissection method according to one of the preceding claims,
**characterized by** the steps
recording an overview image of at least one portion of the preparation and
selecting a preparation region on the basis of the overview image,
wherein the first and second objects (2a, 2b) to be transported are selected in the preparation region.

5. Microdissection method according to Claim 4,
**characterized**
**in that** the selecting of the first and/or second object (2a, 2b) comprises:
ascertaining a number of capturing means along an axis defined by the first capturing means (12a; 22a) and the second capturing means (12b; 22b),
ascertaining a length (L) of the preparation region in a direction that is parallel to the axis, and
determining a position of the second object (2b) relative to the first object (2a) by multiplying the quotient from the length (L) of the preparation region and the number of capturing means by an integer.

6. Microdissection method according to Claim 5,
**characterized**
**in that** the integer is identical to the number of capturing means, arranged along the axis between the first capturing means (12a; 22a) and the second capturing means (12b; 22b), plus 1.

7. Microdissection method according to one of the preceding claims,
**characterized by** the step
ascertaining a thickness (wₐ, w_{b}) of the preparation in each case in the vicinity of the first and second objects (2a, 2b),
wherein the first and/or second objects (2a, 2b) is/are selected such that a surface of the first and/or second object (2a, 2b) is set in dependence on the respectively ascertained thickness (wₐ, w_{b}) of the preparation in the vicinity of the first and/or second object (2a, 2b).

8. Microdissection method according to Claim 7,
**characterized**
**in that** the thickness (wₐ, w_{b}) of the preparation in the vicinity of the first and/or second object (2a, 2b) is ascertained by way of digital holographic interferometry.

9. Microdissection method according to one of the preceding claims,
**characterized**
**in that** the transporting of the first and/or second object (2a, 2b) comprises cutting the preparation and/or accelerating the first and/or second object (2a, 2b) by laser irradiation.

10. Microdissection method according to one of the preceding claims,
**characterized**
**in that** the preparation is a biological preparation (2).

11. Microdissection method according to one of the preceding claims,
**characterized**
**in that** the preparation comprises a tissue section.

12. Microdissection method according to one of Claims 1-10,
**characterized in that** the preparation comprises a cell culture.

13. Microdissection method according to one of the preceding claims,
**characterized by** the steps
providing a plurality of secondary capturing means for capturing an object which has been detached from the preparation, wherein the plurality of secondary capturing means have a predefined spatial arrangement with respect to one another,
transporting a first secondary object of the preparation to a first secondary capturing means and transporting a second secondary object of the preparation to a second secondary capturing means, in each case by way of laser irradiation,
wherein the first secondary object and/or the second secondary object is transported to the first secondary capturing means and/or the second secondary capturing means in a manner such that a position of the second secondary capturing means relative to the first secondary capturing means corresponds to a position of the second secondary object relative to the first secondary object in the preparation, and
wherein the first secondary object in the preparation is arranged in the vicinity of the first object and the second secondary object in the preparation is arranged in the vicinity of the second object.

14. Microdissection method according to one of the preceding claims,
**characterized**
**in that** the first and second capturing means in each case is a well in a microtiter plate.

15. Microdissection method according to one of Claims 1 to 13,
**characterized**
**in that** the first and second capturing means are in each case a portion of a planar carrier that is coated with an adhesive means or of an uncoated planar carrier.

16. Microdissection system, comprising
holding means for holding a preparation (2),
supporting means for supporting a first capturing means (12a; 22a) and a second capturing means (12b; 22b), which are set up in each case for capturing an object which has been detached from the preparation, wherein the first and second capturing means (12a, 12b; 22a, 22b) have a predefined spatial arrangement with respect to one another,
a laser light source for producing a laser beam (4) to transport a first object (2a) and/or a second object (2b) of the preparation to be held by the holding means to the first capturing means (12a; 22a) and/or the second capturing means (12b; 22b),
control means, which are set up to actuate the laser light source such that the first object (2a) and/or the second object (2b) is/are transported to the first capturing means (12a; 22a) and/or the second capturing means (12b; 22b) in a manner such that a position of the second capturing means (12b; 22b) relative to the first capturing means (12a; 22a) corresponds to a position of the second object (2b) relative to the first object (2a) in the preparation,
detection means for ascertaining the position of the second capturing means (12b; 22b), which is to be supported by the supporting means, relative to the first capturing means (12a; 22a), which is to be supported by the supporting means,
**characterized**
**in that** the control means are set up to divide the position, ascertained by the detection means, of the second capturing means (12b; 22b) relative to the first capturing means (12a; 22a) by a scaling factor to determine a position change value, and
**in that** the control means are set up for automatically actuating an adjustment apparatus for positioning the preparation (2) to bring about, by way of the adjustment apparatus, a change in position of the preparation by the position change value, with the result that the position of the second capturing means (12b; 22b) relative to the first capturing means (12a; 22a) is identical to the relative position, enlarged by the scaling factor, of the first and second objects (2a, 2b) in the preparation (2).

17. Microdissection system according to Claim 16,
**characterized**
**in that** the detection means are set up for automatically ascertaining a position of the second capturing means (12b; 22b) relative to the first capturing means (12a; 22a) .

18. Microdissection system according to Claim 16 or Claim 17,
**characterized by**
thickness determination means, which are coupled to the control means and set up to ascertain a thickness (wₐ, w_{b}) of the preparation in the vicinity of the first object (2a) and/or the second object (2b),
wherein the control means are set up to set a lateral size (r_{a,} r_{b}) of the first object (2a) and/or second object (2b), which is to be transported, in each case in dependence on the ascertained thickness (wₐ, w_{b}) of the preparation.

19. Microdissection system according to one of Claims 16-18,
**characterized**
**in that** the microdissection system is set up for performing the method according to one of Claims 1-15.

## Revendications

1. Procédé de microdissection, comprenant les étapes consistant à :
mettre à disposition une préparation (2),
mettre à disposition une pluralité de moyens de collecte (12a à e ; 22a à c), destinés à collecter un objet (2a à e ; 2a à c) qui s'est dissocié hors de la préparation, la pluralité de moyens de collecte (12a à e ; 22a à c) présentant une disposition spatiale prédéfinie les uns par rapport aux autres,
déterminer une position d'un deuxième moyen de collecte (12b ; 22b) par rapport à un premier moyen de collecte (12a ; 22a) de la pluralité de moyens de collecte (12a à e ; 22a à c),
transporter un premier objet (2a) de la préparation vers le premier moyen de collecte (12a ; 22a) et transporter un deuxième objet (2b) de la préparation, différent du premier objet vers le deuxième moyen de collecte (12b ; 22b), chaque fois par irradiation au laser,
le premier objet (2a) et/ou le deuxième objet (2b) étant transporté(s) vers le premier moyen de collecte (12a ; 22a) ou le deuxième moyen de collecte (12b ; 22b), de telle sorte qu'une position du deuxième moyen de collecte (12b ; 22b) par rapport au premier moyen de collecte (12a ; 22a) corresponde à une position du deuxième objet (2b) par rapport au premier objet (2a) dans la préparation,
**caractérisé**
**en ce que** le premier objet (2a) et/ou le deuxième objet (2b) qui doit être transporté est sélectionné en fonction de la position déterminée du deuxième moyen de collecte (12b ; 22b) par rapport au premier moyen de collecte (12a ; 22a), et
**en ce que** la position du deuxième moyen de collecte (12b ; 22b) par rapport au premier moyen de collecte (12a ; 22a) est divisée par un facteur d'échelle, pour créer ainsi une valeur de changement de position et en ce qu'un dispositif d'ajustage destiné à positionner la préparation (2) est activé de telle sorte que la position de la préparation (2) soit changée de la valeur de changement de position, de sorte que la position du deuxième moyen de collecte (12b ; 22b) par rapport au premier moyen de collecte (12a ; 22a) soit identique à la position relative augmentée de la valeur du facteur d'échelle des premier et deuxième objets (2a, 2b) dans la préparation (2).

2. Procédé de microdissection selon la revendication 1, **caractérisé en ce que** le facteur d'échelle est prédéfini par un utilisateur ou automatiquement déterminé par des moyens de commande.

3. Procédé de microdissection selon la revendication 1 ou la revendication 2, **caractérisé par** l'étape consistant à
transporter un troisième objet (2c) de la préparation vers un troisième moyen de collecte (12c ; 22c) par irradiation au laser,
**caractérisé en ce que** le troisième objet (2c) est transporté de telle sorte que la position du troisième moyen de collecte (12c ; 22c) par rapport au premier moyen de collecte (12a ; 22a) soit sensiblement identique à la position du troisième objet (2c) par rapport au premier objet (2a) dans la préparation, multipliée par le facteur d'échelle.

4. Procédé de microdissection selon l'une quelconque des revendications précédentes, **caractérisé par** les étapes consistant à
prendre un cliché d'ensemble d'au moins une partie de la préparation et sélectionner une zone de la préparation, sur la base du cliché d'ensemble,
le premier et deuxième objet (2a, 2b) qui doit être transporté étant sélectionnés dans la zone de la préparation.

5. Procédé de microdissection selon la revendication 4, **caractérisé**
**en ce que** la sélection du premier et/ou deuxième objet (2a, 2b) comprend :
la détermination d'un nombre de moyens de collecte le long d'un axe, lequel est défini à travers le premier (12a ; 22a) et le deuxième moyens de collecte (12b ; 22b),
la détermination d'une longueur (L) de la zone de la préparation dans une direction parallèle à l'axe et
la détermination d'une position du deuxième objet (2b) par rapport au premier objet (2a), par multiplication du quotient de la longueur de la zone de la préparation (L) et du nombre de moyens de collecte par un nombre entier.

6. Procédé de microdissection selon la revendication 5, **caractérisé en ce que** le nombre entier est identique au nombre des moyens de collecte placés le long de l'axe entre le premier moyen de collecte (12a ; 22a) et le deuxième moyen de collecte (12b ; 22b) plus 1.

7. Procédé de microdissection selon l'une quelconque des revendications précédentes, **caractérisé par** l'étape consistant à
déterminer une épaisseur (wₐ, w_{b}) de la préparation chaque fois à proximité du premier ou deuxième objet (2a, 2b),
le premier ou deuxième objet (2a, 2b) étant sélectionné de telle sorte qu'une surface du premier ou deuxième objet (2a, 2b) soit réglée en fonction de l'épaisseur (wₐ, w_{b}) de la préparation respectivement déterminée à proximité du premier ou du deuxième objet (2a, 2b).

8. Procédé de microdissection selon la revendication 7, **caractérisé en ce que** l'épaisseur de la préparation (wₐ, w_{b}) à proximité du premier ou deuxième objet (2a, 2b) est déterminée par interférométrie holographique numérique.

9. Procédé de microdissection selon l'une quelconque des revendications précédentes, **caractérisé en ce que** le transport du premier ou du deuxième objet (2a, 2b) comprend une découpe de la préparation et/ou une accélération du premier ou du deuxième objet (2a, 2b) par irradiation au laser.

10. Procédé de microdissection selon l'une quelconque des revendications précédentes, **caractérisé en ce que** la préparation est une préparation (2) biologique.

11. Procédé de microdissection selon l'une quelconque des revendications précédentes, **caractérisé en ce que** la préparation comprend une coupe tissulaire.

12. Procédé de microdissection selon l'une quelconque des revendications 1 à 10, **caractérisé en ce que** la préparation comprend une culture cellulaire.

13. Procédé de microdissection selon l'une quelconque des revendications précédentes, **caractérisé par** les étapes consistant à
mettre à disposition une pluralité de moyens de collecte secondaires, destinés à collecter un objet qui s'est dissocié hors de la préparation, la pluralité de moyens de collecte secondaires présentant une disposition spatiale prédéfinie les uns par rapport aux autres,
transporter un premier objet secondaire de la préparation vers un premier moyen de collecte secondaire et transporter un deuxième objet secondaire de la préparation vers un deuxième moyen de collecte secondaire, chaque fois par irradiation au laser,
le premier objet secondaire et/ou le deuxième objet secondaire étant transporté vers le premier moyen de collecte secondaire ou le deuxième moyen de collecte secondaire de telle sorte qu'une position du deuxième moyen de collecte secondaire par rapport au premier moyen de collecte secondaire corresponde à une position du deuxième objet secondaire par rapport au premier objet secondaire dans la préparation et le premier objet secondaire étant placé dans la préparation à proximité du premier objet et le deuxième objet secondaire étant placé dans la préparation à proximité du deuxième objet.

14. Procédé de microdissection selon l'une quelconque des revendications précédentes, **caractérisé en ce que** le premier et le deuxième moyen de collecte est respectivement un well d'une plaque de microtitration.

15. Procédé de microdissection selon l'une quelconque des revendications 1 à 13, **caractérisé en ce que** le premier et le deuxième moyen de collecte est respectivement un segment d'un support planaire revêtu d'un agent adhésif ou d'un support planaire non revêtu.

16. Système de microdissection, comprenant des moyens de maintien, destiné à maintenir une préparation (2),
des moyens de support, destinés à supporter un premier moyen de collecte (12a ; 22a) et un deuxième moyen de collecte (12b ; 22b), lesquels sont aménagés chacun pour collecter un objet qui s'est dissocié hors de la préparation, le premier et le deuxième moyens de collecte (12a, 12b ; 22a, 22b) présentant une disposition spatiale prédéfinie l'un par rapport à l'autre,
une source de lumière laser, destinée à générer un faisceau laser (4), pour transporter un premier objet (2a) ou un deuxième objet (2b) de la préparation qui doit être supporté par les moyens de support vers le premier (12a ; 22a) ou le deuxième moyen de collecte (12b ; 22b),
des moyens de commande, lesquels sont aménagés pour activer la source de lumière laser de telle sorte que le premier objet (2a) et/ou le deuxième objet (2b) soit transporté vers le premier moyen de collecte (12a ; 22a) ou le deuxième moyen de collecte (12b ; 22b), de sorte qu'une position du deuxième moyen de collecte (12b ; 22b) par rapport au premier moyen de collecte (12a ; 22a) corresponde à une position du deuxième objet (2b) par rapport au premier objet (2a) dans la préparation,
des moyens de détection, destinés à déterminer la position du deuxième moyen de collecte (12b ; 22b) qui doit être supporté par les moyens de support par rapport au premier moyen de collecte (12a ; 22a) qui doit être supporté par les moyens de support,
**caractérisé**
**en ce que** les moyens de commande sont aménagés, dans l'objectif de déterminer une valeur de changement de position, pour diviser par un facteur d'échelle la position du deuxième moyen de collecte (12b ; 22b) déterminée par les moyens de détection par rapport au premier moyen de collecte (12a ; 22a) et en ce que les moyens de commande sont aménagés pour activer automatiquement un dispositif d'ajustage pour le positionnement de la préparation (2), pour provoquer par l'intermédiaire du dispositif d'ajustage un changement de préparation de la valeur de changement de position, de sorte que la position du deuxième moyen de collecte (12b ; 22b) par rapport au premier moyen de collecte (12a ; 22a) soit identique à la position relative augmentée du facteur d'échelle du premier et du deuxième objets (2a, 2b) dans la préparation (2).

17. Système de microdissection selon la revendication 16, **caractérisé en ce que** les moyens de détection sont aménagés pour déterminer automatiquement une position du deuxième moyen de collecte (12b ; 22b) par rapport au premier moyen de collecte (12a ; 22a) .

18. Système de microdissection selon la revendication 16 ou la revendication 17, **caractérisé par** des moyens de détermination de l'épaisseur connectés sur les moyens de commande, lesquels sont aménagés pour déterminer une épaisseur de la préparation (wₐ, w_{b}) à proximité du premier objet (2a) et/ou du deuxième objet (2b),
les moyens de commande étant aménagés pour régler une grandeur latérale (r_{a,} r_{b}) du premier (2a) et/ou du deuxième objet (2b) qui doit être transporté, chaque fois en fonction de l'épaisseur déterminée de la préparation (wₐ, w_{b}) .

19. Système de microdissection selon l'une quelconque des revendications 16 à 18, **caractérisé en ce que** le système de microdissection est aménagé pour réaliser le procédé selon l'une quelconque des revendications 1 à 15.
